**Europäisches Patentamt**

**European Patent Office**

**Office européen des brevets**

(11) Numéro de publication: **0 218 519
B1**

(12) # FASCICULE DE BREVET EUROPEEN

(45) Date de publication du fascicule du brevet:
**06.09.89**

(51) Int. Cl.⁴: **G01K 7/00, G01K 7/34**

(21) Numéro de dépôt: **86402088.8**

(22) Date de dépôt: **23.09.86**

(54) Procédé de surveillance de température à l'aide d'un détecteur à fil.

(30) Priorité: **27.09.85 FR 8514379**

(43) Date de publication de la demande:
**15.04.87 Bulletin 87/16**

(45) Mention de la délivrance du brevet:
**06.09.89 Bulletin 89/36**

(84) Etats contractants désignés:
**BE DE GB IT NL SE**

(56) Documents cités:
**EP-A- 0 142 310
FR-A- 1 426 596
GB-A- 2 158 229
US-A- 3 059 229**

(73) Titulaire: **THOMSON-CSF, 51, Esplanade du Général de Gaulle, F-92800 Puteaux(FR)**

(72) Inventeur: **Sassier, Pierre Henri, THOMSON-CSF SCPI 19, avenue de Messine, F-75008 Paris(FR)**

(74) Mandataire: **Grynwald, Albert et al, THOMSON-CSF SCPI, F-92045 PARIS LA DEFENSE CEDEX 67(FR)**

ACTORUM AG

**Description**

L'invention est relative à un procédé et dispositif de surveillance de température à l'aide d'un fil ou câble, notamment en vue de détecter les incendies.

Dans certains engins de transport, en particulier les avions, on prévoit souvent un moyen de surveillance de la température afin de détecter s'il ne se produit pas des échauffements anormaux en des emplacements déterminés, ceux, notamment les moteurs, pour lesquels le risque d'incendie est le plus grand. A cet effet on utilise un fil ou câble coaxial présentant entre le conducteur central ( ou âme) et le conducteur extérieur, un garnissage en un matériau, généralement semiconducteur, dont la résistivité varie avec la température. Ce câble suit un trajet passant par les zones à plus fort risque et la surveillance est effectuée en mesurant en permanence, ou de façon périodique, la résistance à une extrémité du câble entre l'âme et le conducteur extérieur, cette résistance étant fonction de la résistivité du matériau composant l'élément intermédiaire et donc de la température. Si la variation relative de résistance dépasse une valeur prédéterminée, une alarme est déclenchée.

La résistance mesurée entre l'âme et le conducteur extérieur est inversement proportionnelle à la longuer du câble. Il en résulte qu'ainsi, par la seule mesure de résistance, on ne détermine pas de façon précise la variation de température car, pour une même température, la variation de résistance est fonction de la longueur de la partie de câble sur laquelle se produit l'échauffement. C'est pourquoi jusqu'à présent un dispositif de surveillance filaire sert seulement à déclencher une alarme. Mais même pour cette seule utilisation l'imprécision peut conduire à déclencher une alarme pour un échauffement restant admissible.

L'invention permet de déterminer la température (ou sa variation) de façon beaucoup plus précise et évite le déclenchement d'une alarme pour des situation qui ne nécessitent pas un tel déclenchement.

A cet effet le dispositif selon l'invention comprend un moyen de mesure du produit RC, R étant la résistance et C la capacité entre âme et conducteur extérieur. La résistance étant inversement proportionnelle à la longueur et la capacité proportionnelle à la longueur, le produit RC est ainsi indépendant de cette longueur. Il en résulte que la variation du produit RC fournit une mesure précise de la variation de température, peu sensible à la longueur de câble subissant l'échauffement.

La mesure du produit RC, c'est-à-dire de la constante de temps $t_0$ du circuit RC que constitue le câble, est effectuée par exemple en déterminant la courbe de réponse en fréquence du filtre que constitue ce circuit.

On a déjà proposé (brevet US 3 059 229) de détecter à la fois la résistance et la capacité d'un composant à câble. Mais l'utilisation qui est faite, dans ce dispositif connu, de la résistance et de la capacité ne permet pas d'obtenir l'insensibilité à la longueur de câble subissant l'échauffement.

D'autres caractéristiques et avantages de l'invention apparaîtront avec la description de certains de ses modes de réalisation, celle-ci étant effectuée en se référant aux dessins ci-annexés sur lesquels:

– la figure 1 est un schéma en coupe axiale d'un fil ou câble sensible à la température,
– la figure 2 est un schéma électrique équivalent au câble de la figure 1,
– la figure 3 est un diagramme montrant une propriété du câble de la figure 1,
– la figure 4 est un schéme d'un dispositif de mesure, et
– les figures 5 et 6 sont des diagrammes illustrant des procédés de mesure de la température à l'aide du câble de la figure 1.

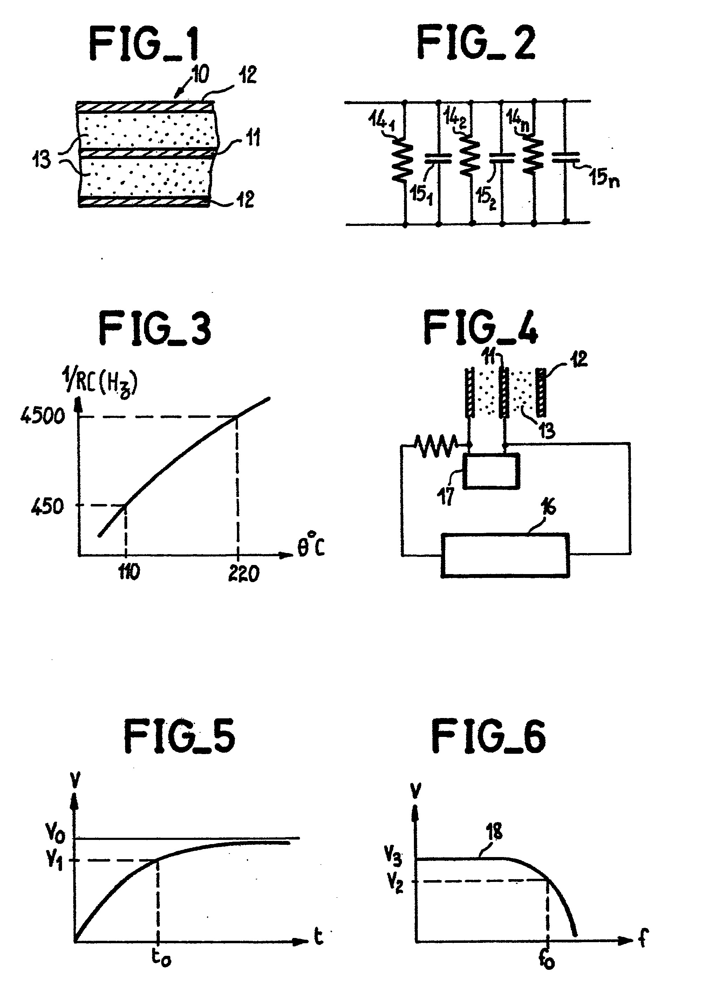

Un câble 10 (figure 1) sensible à la température est formé d'un conducteur central ou âme 11, d'un conducteur périphérique 12 et d'une matière intermédiaire 13 généralement semi-conductrice dont la résistivité et la permittivité diélectrique varient en fonction de la température. Un câble de ce type est par exemple vendu par la Société THERMOCOAX.

Un tel câble 10 est utilisé notamment à bord des avions ou d'autres moyens de transport afin de détecter des échauffements anormaux. Ce câble est donc disposé selon un trajet passant par les emplacements où il risque de se produire un incendie. L'extrémité du câble est disposée, par exemple, dans la cabine de pilotage avec, selon la technique antérieure, des moyens de mesure de résistance entre l'âme 11 et le conducteur extérieur 12 : s'il se produit un échauffement, la résistivité varie et une alarme est déclenchée si la variation dépasse une limite prédéterminée.

Comme on l'a déjà indiqué ci-dessus la variation de résistance ne permet pas de mesurer la température avec précision. En effet le câble 10 peut être considéré comme étant constitué par un ensemble de résistances élémentaires $14_1$, $14_2$....$14_n$ (figure 2) en parallèle, chacune ayant la valeur R. Ainsi la résistance mesurée à l'extrémité du câble entre l'âme 11 et le conducteur 12 est inversement proportionnelle à la longueur $\ell$ de ce câble. La variation de résistance est donc fonction de la longueur sur laquelle se produit l'échauffement.

Le garnissage 13 présente par ailleurs une permittivité diélectrique qui varie avec la température. Ainsi le câble 10 peut également être considéré comme étant formé de condensateurs élémentaires $15_1$, $15_2$...$15_n$ en parallèle (figure 2) et la capacité mesurée à l'extrémité du câble est proportionnelle à la longueur $\ell$.

Par contre le produit RC est indépendant de la longueur. C'est pourquoi si on mesure cette quantité, qui constitue une constante de temps, on obtient une indication relativement précise sur la température.

La figure 3 montre la variation de la quantité

$$\frac{1}{RC}$$

exprimée en Hertz, avec la température θ, exprimée en degrés Celcius. On voit que pour la température de 110° C

$$\frac{1}{RC}$$

a pour valeur 450 Hertz tandis que pour 220°C

$$\frac{1}{RC}$$

= 4500 Hertz.

Pour mesurer la quantité

$$\frac{1}{RC}$$

ou RC on peut procéder de diverses manières. Dans un premier exemple à l'extrémité du câble 10 on injecte entre conducteurs 11 et 12, à l'aide d'un générateur 16 (figure 4) une impulsion de niveau $V_0$ (figure 5) et un circuit 17 détermine le temps $t_0$, proportionnel à RC, au bout duquel le signal entre les conducteurs 11 et 12 atteint une valeur $V_1$ légèrement inférieure à $V_0$.

Dans une autre réalisation on détermine la courbe de réponse 18 (figure 6) que constitue le filtre RC formé par la matière semiconductrice 13. Cette courbe de réponse est une variation de niveau de signal V en fonction de la fréquence f. La fréquence $f_0$, proportionnelle à

$$\frac{1}{RC}$$

est celle pour laquelle le signal de sortie du filtre a la valeur $V_2$, légèrement inférieure au signal d'entrée $V_3$.

Quel que soit le type de mesure effectuée on a intérêt à choisir la longueur $\ell$ sur laquelle s'étend le câble dans les emplacements à risque par rapport à la longueur totale L de ce câble en fonction de la précision désirée. Les considérations suivantes permettront de déterminer les longueurs L et $\ell$ ainsi que la nature du matériau constituant le garnissage 13.

Dans ce qui suit on désigne par $r_A$ la résistance présentée, par unité de longueur, entre âme et conducteur extérieur par le garnissage 13 à la température ambiante. $r_T$ représente la même quantité mais pour une température T supérieure à la température ambiante.

Ainsi les résistances du garnissage 13, d'une part, sur la longueur $\ell(R_T$ à température T) et, d'autre part, sur la longueur L-$\ell$ ($R_A$ à la température ambiante) ont pour valeurs :

$$R_T = \frac{r_T}{\ell} \quad \text{et} \quad R_A = \frac{r_A}{L-\ell} \qquad (1)$$

A l'extrémité du câble la résistance R entre âme et conducteur extérieur est donc :

$$R = \frac{R_T R_A}{R_T + R_A} \qquad (2)$$

soit :

$$R = \frac{r_A r_T}{\ell(L-\ell)} \frac{1}{\dfrac{r_T}{\ell} + \dfrac{r_A}{L-\ell}} = r_T \frac{r_A}{(L-\ell)r_T + \ell\, r_A} \qquad (3)$$

Par ailleurs $c_A$ est la capacité présentée par le câble, par unité de longueur, entre âme et conducteur à la température ambiante et $c_T$ est la même quantité, mais à la température T. On peut écrire :

$$c_A = (L - \ell)\, c_A \quad \text{et} \quad c_T = \ell\, c_T \qquad (4)$$

3

à l'extrémité du câble la capacité C entre âme et conducteur extérieur a pour valeur :

$$C = c_A + c_T \qquad (5)$$

soit:

$$C = c_T \left[ (L - \ell) \frac{c_A}{c_T} + \ell \right] \qquad (6)$$

ainsi:

$$RC = r_T c_T \frac{r_A}{(L-\ell)r_T + \ell r_A} \left[ (L-\ell) \frac{c_A}{c_T} + \ell \right] ;$$

$$RC = r_T c_T \frac{1}{(L-\ell) \frac{r_T}{r_A} + \ell} \quad \ell \left[ \frac{L-\ell}{\ell} \frac{c_A}{c_T} + 1 \right] ;$$

$$RC = r_T c_T \frac{1}{\frac{L-\ell}{\ell} \frac{r_T}{r_A} + 1} \left[ 1 + \frac{L-\ell}{\ell} \frac{c_A}{c_T} \right] ;$$

enfin:

$$RC = r_T c_T \frac{1 + (\frac{L}{\ell} - 1) \frac{c_A}{c_T}}{1 + (\frac{L}{\ell} - 1) \frac{r_T}{r_A}} \qquad (7)$$

De la formule (7) ci-dessus on déduit que pour que la produit RC soit peu sensible à la longueur il faut choisir la nature du matériau de garnissage 13 de façon que :

$$\frac{c_A}{c_T} \sim \frac{r_T}{r_A} \qquad (8)$$

Bien entendu il ne sera en général pas possible de respecter pour toutes les températures T la condition d'égalité entre les valeurs

$$\frac{c_A}{c_T} \quad \text{et} \quad \frac{r_T}{R_A}$$

Par contre on peut choisir le matériau, et donc ses valeurs $c_A$, $c_T$, $r_T$, $r_A$, de façon à obtenir l'égalité stricte pour la plus petite, $T_0$, des températures pour laquelle on considère qu'il existe un danger ou risque d'incendie. Cette température est par exemple 110° C.

Ainsi dans le cas de l'exemple mentionné ci-dessus les valeurs

$$\frac{r_T}{r_A} \quad \text{et} \quad \frac{c_A}{c_T}$$

sont toutes deux de 0,04 pour T = 110° C et A = 20° C.

Il est à noter que la détection de température minimale se produit juste au début de l'incident, c'est-à-dire à un moment où la longueur $\ell$ est relativement faible; dans ces conditions si la condition (8) n'était pas respectée RC aurait une valeur s'écartant de celle de $r_T c_T$ comme le montre la formule (7) ci-dessus. Par contre après le début de l'incident la chaleur se propage et augmente la longueur $\ell$ ce qui contribue à rapprocher le facteur de $r_T c_T$ dans la formule (7) de la valeur 1 et compense au moins en partie, pour ce facteur, le fait que

$$\frac{c_A}{c_T}$$

s'écarte de

$$\frac{r_T}{r_A}$$

étant donné qu'à mesure que le temps passe la température T augmente. Au maintien de la précision contribue aussi le fait que r et c varient en sens inverse en fonction de la température.

Dans l'exemple ci-dessus on a d'ailleurs constaté que pour les températures supérieures à 110° C l'écart de RC par rapport à $r_T c_T$ reste relativement faible, de l'ordre d'au maximum 10 %, même si les rapports

$$\frac{L}{\ell}$$

varient dans de grandes proportions. On peut ainsi mesurer la température dans les emplacements à risques avec une précision satisfaisante, au moins pour une gamme déterminée de températures, par exemple entre 110° C et 220° C.

L'invention fournissant un moyen de mesure de la température peu sensible à la longueur du câble les risques d'émission de fausses alarmes sont nettement diminués par rapport aux dispositifs de surveillance antérieurement connus.

**Revendications**

1. Procédé de contrôle de la température dans une enceinte, notamment un moyen de transport tel qu'un avion, à l'aide d'un fil ou câble présentant, entre un conducteur intérieur (11) et un conducteur extérieur (12), un élément (13) en matériau de résistivité et de permittivité diélectrique qui varient avec la température, caractérisé en ce que pour contrôler ladite température on contrôle, à une extrémité de ce câble, le produit de la résistance (R) par la capacité (C) entre conducteur central (11) et conducteur extérieur (12).

2. Procédé selon la revendication 1, caractérisé en ce, que pour déterminer le produit (RC), on applique, à l'extrémité du câble, un signal continu ($V_0$) et on détermine le temps ($t_0$) que met le signal entre conducteur central et extérieur à l'extrémité du câble pour atteindre une valeur déterminée ($V_1$) inférieure à la valeur ($V_0$) du signal continu.

3. Procédé selon la revendication 1, caractérisé en ce qu'on détermine le produit (RC) en établissant la courbe de réponse en fonction de la fréquence (f) du filtre que constitue le conducteur (11, 12) à son extrémité.

4. Procédé selon l'une quelconque des revendications 1 à 3, caractérisé en ce que le matériau constituant ledit élément (13) est tel que :

$$\frac{c_A}{c_T} \approx \frac{r_T}{r_A}$$

$r_A$ et $c_A$ étant respectivement la résistance et la capacité présentées par le câble entre âme et conducteur central par unité de longueur à la température ambiante et $r_T$, $c_T$ étant les mêmes résistances et capacités mais à la température T qui est la température minimale pour laquelle on désire déclencher une alarme.

5. Application du procédé selon l'une quelconque des revendications 1 à 4, à une installation de contrôle de la température.

**Patentansprüche**

1. Verfahren zur Überwachung der Temperatur in einem Raum, insbesondere in einem Transportmittel wie einem Flugzeug, mit Hilfe eines Drahts oder Kabels, das zwischen einem Innenleiter (11) und einem Außenleiter (12) ein Element (13) aus einem Stoff mit einem Widerstand und einer Dielektrizitätskonstante besitzt, die sich mit der Temperatur ändern, dadurch gekennzeichnet, daß zur Überwachung der Temperatur das Produkt aus Widerstand (R) und Kapazität (C) zwischen dem Zentralleiter (11) und dem Außenleiter (12) an einem Ende des Kabels kontrolliert wird.

2. Verfahren nach Anspruch 1, dadurch gekennzeichnet, daß zur Bestimmung des Produkts (RC) an das Ende des Kabels ein Dauersignal ($V_0$) angelegt und die Zeit ($T_0$) gemessen wird, die das Signal zwischen dem Zentralleiter und dem Außenleiter am Ende des Kabels benötigt, um einen vorbestimmten Wert ($V_1$) unterhalb des Werts ($V_0$) des Dauersignals zu erreichen.

3. Verfahren nach Anspruch 1, dadurch gekennzeichnet, daß das Produkt (RC) durch Erstellung der Kennlinie in Abhängigkeit von der Frequenz (f) des Filters bestimmt wird, welches der Leiter (11, 12) an seinem Ende darstellt.

4. Verfahren nach einem der Ansprüche 1 bis 3, dadurch gekennzeichnet, daß das Material, welches das genannte Element (13) bildet, von solcher Art ist, daß gilt:

$$c_A/c_T \simeq r_T/r_A \,;$$

wobei $r_A$ und $c_A$ den Widerstand bzw. die Kapazität darstellen, die das Kabel bei Umgebungstemperatur zwischen Seele und Zentralleiter je Längeneinheit bilden, während $r_T$, $c_T$ denselben Widerstand bzw. die Kapazität bei der Temperatur darstellen, welche die niedrigste Temperatur ist, bei der ein Alarm ausgelöst werden soll.

5. Anwendung des Verfahrens nach einem der Ansprüche 1 bis 4 bei einer Anlage zur Überwachung der Temperatur.

**Claims**

1. A method for monitoring the temperature in an enclosed space, notably in a transport means such as an aircraft, by the use of a wire or cable including an element (13) between an inner conductor (11) and an outer conductor (12), which element consists of a material having a resistivity and a dielectric permittivity, that varies in accordance with temperature, characterized in that for monitoring said temperature, the product of the resistance (R) and the capacity (C) is controlled which exists at one end of the cable between the central conductor (11) and the outer conductor (12).

2. A method according to claim 1, characterized in that for determining the product (RC), a continuous signal ($V_0$) is applied to the end of the cable and the time ($t_0$) is determined in which the signal between the central conductor and the outer conductor at the end of the cable attains a given value ($V_1$) which is inferior to the value ($V_0$) of the continuous signal.

3. A method according to claim 1, characterized in that the product (RC) is determined in establishing the response curve as a function of the frequency (f) of the filter which is constituted by the conductor (11, 12) at its end.

4. A method according to any one of claims 1 to 3, characterized in that the material constituting said element (13) is of a nature such as to satisfy the formula:

$$c_A/c_T \simeq r_T/r_A \,;$$

wherein $r_A$ and $c_A$ represent respectively the resistance and the capacity exhibited by the cable at ambient temperature and per unity of length between the core and the central conductor, whereas $r_T$, $c_T$ represent the like resistance and capacity but at a temperature T, which is the minimum temperature at which an alarm shall be given.

5. An application of the method according to any one of claims 1 to 4 to an installation for temperature control.

# FIG_1

# FIG_2

# FIG_3

# FIG_4

# FIG_5

# FIG_6